# EUROPÄISCHE PATENTSCHRIFT

(11) **EP 2 266 824 B1**
(45) Veröffentlichungstag und Bekanntmachung des Hinweises auf die Patenterteilung: **15.05.2013**
(21) Anmeldenummer: 10166369.8
(22) Anmeldetag: 17.06.2010
(51) Int. Cl.: B60H 1/34

(54) **Luftdurchsatzelement**
Air throughput element
Elément de débit d'air

(30) Priorität: 20.06.2009 DE 102009025704
(43) Veröffentlichungstag der Anmeldung: 29.12.2010
(73) Patentinhaber: Dr. Schneider Kunststoffwerke GmbH, 96317 Kronach (DE)
(72) Erfinder: Uhlenbusch, Olaf, 96275 Marktzeuln (DE); Komann, Christian, 96528 Schalkau (DE)
(74) Vertreter: Pröll, Jürgen

(56) Entgegenhaltungen:
- DE-A1- 10 144 755
- DE-A1- 19 943 822
- DE-A1-102004 003 059
- DE-A1-102006 054 847
- DE-B3-102006 016 278
- FR-A1- 2 728 530

## Beschreibung

Die Erfindung betrifft ein Luftdurchsatzelement, wie es zum Drosseln oder Ableiten eines Luftstromes in einer Düse in einem Kraftfahrzeug zur Einbringung frischer oder erwärmter Luft in den Fahrgastraum einsetzbar ist. Solche Luftdurchsatzelemente können aber auch in einem Kraftfahrzeug zur Zuführung der vom Motor benötigten Kühlluft und Ansaugluft verwendet werden. Es versteht sich dabei von selbst, dass die bauliche Anordnung und Ausführung eines Luftdurchsatzelementes dem Verwendungszweck entsprechend anzupassen ist und mit Fügemitteln zu versehen ist, um in eine Wand oder in einen Verbund angeordnet oder miteinander verbunden werden zu können. Solche Luftdurchsatzelemente können in weiteren Bereichen eingesetzt werden.

Aus der DE 10 2004 018 391 B4 ist es bei einer an einen Luftkanal anschließbaren Luftdüse, insbesondere für den Fahrzeuginnenraum, bekannt, ein Luftaustrittsgitter aus einer Vielzahl von aufeinander liegenden und parallel gegeneinander verschiebbaren Gitterplatten zu bilden, das von einer ortsfesten Blende, vorzugsweise einer Dekorblende, gehalten ist. Die Gitterplatten bestehen aus elastisch verformbaren Folien. Diese Folien sind übereinander gelegt und bilden einen Stapel. Bei entsprechender gegenseitiger Ausrichtung strömt die Luft durch die eingebrachten Löcher. Durch diese Maßnahme ist eine freiere Gestaltung der Gitterstruktur möglich. Ferner werden die Funktionsfähigkeit und die optischen Eigenschaften verbessert. Die ungewöhnlich große Vielzahl von gegeneinander verschiebbaren Folien führt unter anderem dazu, dass der Luftaustritt nicht als Strahl, sondern als angenehm diffuse Verteilung empfunden wird. Darüber hinaus wird durch die Vielzahl der verschiebbaren Folien eine maximale Auslenkung des Luftaustritts erreicht, bei der die Löcher, bezogen auf die Blende aus der letzten Folie, nicht mehr sichtbar sind, so dass eine Durchsicht auf den Luftkanal ausgeschlossen ist. Um eine günstige Ausströmung zu erreichen, ist das Verhältnis zwischen der Stapelhöhe der aufeinander liegenden Folien zum jeweiligen Durchmesser der Löcher etwa gleich groß. Vorteilhafterweise werden Folien mit geringem Reibungskoeffizienten verwendet, um eine gegenseitige Verschiebung auf einfache Weise zu ermöglichen. Die Löcher können dabei in einem vorbestimmten Lochmuster eingebracht sein, das beim Verschieben der Folien gegeneinander definierte Luftströme und Ausrichtungen der Luftströme bewirkt. Die Verstellung des Folienpaketes erfolgt über Verstellstifte, die vorzugsweise an den vier Eckenbereichen des Folienpaketes anliegen und sich quer dazu erstrecken. Jeder Verstellstift ist in einer kalottenartigen Ausnehmung der Blende gelagert und über eine Verstellplatte auslenkbar, die das Folienpaket auf der der Dekorblende abgewandten Seite begrenzt. Die Verstellplatte selbst ist über den Steuerhebel oder über einen motorischen Antrieb gegenüber den Folien verschiebbar. Auf der der Verstellplatte gegenüberliegenden Seite ist das Folienpaket durch eine Halteplatte, die gegenüber der Blende ortsfest ist und sozusagen ein Schwenklager für die Verstellstifte bildet, begrenzt. Durch die flache Positionierung der Luftdüse in der Armaturentafel ergibt sich ein optimierter Ausströmwinkel.

Die Offenlegungsschrift DE 10 2006 054 847 A1 beschreibt einen Luftausströmer für einen Fahrzeuginnenraum, der ein im Wesentlichen torusförmiges Gehäuse umfasst, in welches ein Einsatz aus einem elastisch verformbaren Material angeordnet ist. Der Einsatz ist hierbei aus einem elastisch verformbaren Material gebildet, das jeweils entweder nach innen oder nach außen gewölbt sein kann. In diesem Einsatz befindet sich eine Mehrzahl von torusförmigen (röhrenförmigen) Öffnungen. Die Öffnungen, die sich nicht alle in Längsrichtung des Gehäuses erstrecken, behalten bei der Veränderung der Betriebsstellung jedoch im Wesentlichen ihre Form bei, so dass diese in beiden geschilderten Positionen als torusförmig anzusehen sind. Es sind jedoch keine Luftleitelemente aus sich in Längsrichtung des Gehäuses erstreckenden Wänden beschrieben, die über Stellelemente aus ihrer geometrischen Grundform in eine andere, abgewandelte Form verbringbar sind.

Die Patentschrift DE 10 2006 016 278 B3 betrifft eine Luftleiteinrichtung für einen Fahrzeuginnenraum. Diese beschreibt, dass über einen Ausströmer mit unveränderlichen Wänden entlang eines Luftstroms Luft ausgeleitet wird. Der Ausströmer ist über ein flexibles Element mit einem starren Träger verbunden und abgedichtet und über die Einwirkung eines plattenförmigen Elementes drehbar. Eine Veränderung der Grundform der Wände eines Luftausströmers ist jedoch nicht vorgesehen.

Die Patentschrift FR 2 728 530 A1 betrifft eine Luftausströmvorrichtung für ein Fahrzeug. Für diese Luftausströmvorrichtung sind an einem flexiblen Stück Zähne angebracht, an deren oberen Ende Zungen angebracht sind. In einer geschlossenen Stellung liegen die Zungen derart aneinander an, dass diese ein Ausströmen von Luft sperren. Wird jedoch das flexible Stück in einen gebogenen Zustand gebracht, ergeben sich zwischen den einzelnen Zungen Zwischenräume durch die Luft ausströmen kann. Das Verändern von in Längsrichtung ausgerichteten Wänden von einer geometrischen Grundform in eine andere, ist jedoch nicht offenbart.

Aus der DE 10 2004 003 059 A1 ist eine Luftausstromsteuereinheit für den Einsatz im Fahrzeuginnenraum eines Kraftfahrzeuges bekannt, die eine Vielzahl von koaxialen, luftdurchlässigen Platten aufweisen, die jeweils aus mehreren radial angeordneten Stegen ausgebildet sind und mehrere im Wesentlichen radial angeordnete Luftelemente umfassen, die sich jeweils zwischen zwei axial nacheinander angeordneten Stegen der jeweiligen Platten erstrecken. Die Luftleitelemente können mindestens teilweise aus einem elastischen Material gebildet sein. Sich in Längsrichtung des Gehäuses erstreckende Wänden aus flexiblem Material sind jedoch nicht offenbart.

Die Offenlegungsschrift DE 101 44 755 A1 betrifft eine Luftleitvorrichtung zum richtungsmäßig definierten Einleiten von auf der Rückseite der Vorrichtung zugeführter Luft in einen Innenraum eines Fahrzeugs. Die Luftleitvorrichtung umfasst einen Luftleitkörper, der aus elastischem Material, insbesondere Schaumstoff besteht und als relativ dicke Platte ausgebildet ist. Der Luftleitkörper besitzt durchgehende Ausnehmungen, die mit den Ausnehmungen einer Lochblende korrespondieren. Rückseitig ist an den Luftleitkörper eine Verschiebeplatte angeschlossen, die ebenfalls Ausnehmungen aufweist, die mit den durchgehenden Ausnehmungen des Luftleitkörpers korrespondieren. Die Richtung der durchgehenden Ausnehmungen bestimmt die Richtung der aus der Luftleitvorrichtung austretenden Luft. Durch Verschieben der Verschiebeplatte in senkrecht aufeinanderstehenden Richtungen kann in dem vorgegebenen konstruktiven Rahmen die Richtung der austretenden Luft eingestellt und verändert werden. Beim Verschieben der Verschiebungsplatte tritt eine Scherung der durchgehenden, röhrenförmigen Ausnehmungen auf. Bei dieser Scherung behalten die Durchgangsöffnungen jedoch ihre röhrenförmige geometrische Grundform bei.

Die Offenlegungsschrift DE 199 43 822 A1 gibt eine Strömungsleitanordnung, insbesondere einen Ausströmgrill für Lüftungs- und Klimaanlagen von Kraftfahrzeugen, an. In dieser Strömungsleitanordnung sind Luftleitrippen mit Schließ- und Öffnungseinrichtung aus Luftleitklappen vorgesehen, die aus drei flexiblen untereinander verbundenen Abschnitten aufgebaut sind. Innerhalb eines Kanalabschnittes sind nebeneinander liegende Luftleitklappen angeordnet, die den gleichen Abstand zueinander aufweisen und jeweils aus drei flexiblen untereinander verbundenen Abschnitten bestehen. Diese Luftleitklappen können von einer geöffneten Position in eine geschlossene Position gebracht werden. Über Wände aus flexiblem Material, die sich in Längsrichtung des Gehäuses erstrecken, ist jedoch nichts offenbart.

Darüber hinaus sind Runddüsen, eckige Düsen und andere Düsen bekannt, die entweder horizontal oder vertikal Lamellen aufweisen, die um Schwenkachsen gegeneinander oder miteinander gleichförmig verstellbar sind, um den Luftstrom, der durch das Düsengehäuse heraustritt, abzulenken oder zu drosseln. Darüber hinaus ist es bekannt, gegeneinander verdrehbare Räder mit Formflächen als Ablenk-oder Zerstreuungsdüsen zu verwenden.

Es ist ferner bei Lüftern für Kraftfahrzeuge bekannt, über einen Stellring fächerartig angeordnete Lamellen aus einer ersten Verschließstellung in eine Öffnungsstellung und jede beliebige Zwischenverstellung mit gleichzeitiger Winkeleinstellung zu verbringen. Dies kann manuell über Betätigungselemente erfolgen oder über einen elektromotorischen oder einen anderen Antrieb, beispielsweise auch Federantrieb. Über solche Lüfter wird beispielsweise die Luftzufuhr an den Kühler eines Motors gedrosselt, z. B. im Winter, und im Sommer in eine solche Öffnungsstellung verbracht, dass die maximale Luftzufuhr gewährleistet ist.

Von diesem Stand der Technik ausgehend, liegt der Erfindung die Aufgabe zugrunde ein neuartiges Luftdurchsatzelement anzugeben, das eine andere Aufbaustruktur aufweist, eine einfache Bedienung ermöglicht und sowohl eine luftableitende Funktion als auch eine luftstromdrosselnde Funktion wahrzunehmen vermag und preiswert herstellbar ist.

Die Erfindung löst die Aufgabe durch Ausbildung eines Luftdurchsatzelementes gemäß den im Anspruch angegebenen technischen Lehren, wonach in einer ersten Ausführungsform das Luftdurchsatzelement ein vorder- und rückseitig offenes Gehäuse aufweist, in welchem Luftleitelemente aus sich in Längsrichtung des Gehäuses erstreckenden Wänden aus flexiblem Material angeordnet sind, welche Wände über Stellelemente aus ihrer geometrischen Grundform in eine gewünschte abgewandte Form durch Einwirken einer Druck-und/oder einer Schiebekraft und/oder eines Drehmomentes verbringbar sind.

Durch die Stellelemente können die Luftleitelemente bei einseitiger Fixierung in dem Gehäuse mit Betätigung des Stellelementes gestaucht, gedrückt oder derart verdreht werden, dass die Luftströmung in eine gewünschte Richtung gelenkt und/oder gedrosselt wird. Dies ist sowohl mit Luftleitelementen aus flexiblem Material, wie beispielsweise gummiartigem Kunststoff, oder aber auch mit Wänden realisierbar, die aus gegeneinander beweglichen Wandelementen bestehen. Letztere sind insbesondere geeignet, um in eckigen Gehäusen eingesetzt werden zu können. Selbstverständlich kann auch ein solches eckiges Gehäuse unterteilt sein und aus mehreren Durchtrittskanälen bestehen, in denen unabhängig voneinander oder miteinander verstellbare Wände eingebracht sind. Diese Wände können sich beispielsweise an einer Frontmaske abstützen, während das Stellelement von der Rückseite mit einer Druckwand die einzelnen Wände hintergreift und durch Vorschieben der Druckwand eine Verformung in eine gewünschte Richtung durch Verbiegen oder Schrägstellen ermöglicht. Dabei können die eingesetzten Wände selbstverständlich auch im Biege- oder Faltungsbereich dünner ausgeführt sein. Ihre Dicke muss aber immer so gewählt sein, dass kein Störgeräusch durch Flattern entstehen kann.

Die Wände können grundsätzlich verschiedene Formen aufweisen und auch in beliebiger Art und Weise angeordnet sein. Sie können in Reihen nebeneinander und/oder hintereinander oder verschachtelt angeordnet sein. Beispielsweise können bei einem viereckigen Düsengehäuse die Wände stehende Lamellenstrukturen aufweisen. An einer Seite, beispielsweise der Vorderseite, hintergreifen sie ein Abdeckungsgitter an den Stegen und sind daran abgestützt. Rückseitig kann hingegen ein in Längsrichtung der Wände bewegliches Gitter aufgesetzt sein. Durch Ausübung einer Druckkraft auf dieses Gitter werden die Wände infolge ihrer Eigenelastizität seitlich ausgelenkt. Dies ist vorgebbar, indem beispielsweise die Wand gebogen in ihrer Grundstruktur ausgebildet ist, so dass in Biegungsrichtung die Auslenkung erfolgt. Die Wände können aber auch gegeneinander gebogen ausgeführt sein, so dass sie praktisch ein X bilden, wodurch zwei Wände sich immer aufeinander zu bewegen, wenn eine Druckkraft in Längsrichtung ausgeübt wird. Auch kann durch Druckerhöhung eine Verformung erfolgen, die eine Abdichtung, mindestens aber eine Luftdrosselung bewirkt.

Selbstverständlich lassen sich die Wände auch in Längsrichtung in unterschiedliche Formen, z. B. in Wellenform, einbringen, wodurch zusätzliche Luftstromablenkungen möglich sind. Es ist leicht vorstellbar, dass eine Faltung der Wand, die in Form eines Balges angeordnet ist, erfolgt, wenn sie in Längsrichtung der Düse zusammengeschoben wird. Selbiges ist auch erzielbar, wenn die Wand aus einzelnen Wandelementen zusammengesetzt ist, die beispielsweise jeweils über ein Filmscharnier miteinander verbunden sind. Anstelle eines solchen Filmscharniers kann selbstverständlich auch ein anderes Scharnier vorgesehen sein. Wenn die Wände dabei soweit ausgelenkt werden können, dass sie an den Seitenwänden des Gehäuses in einer definierten Stellung anliegen, so kann auch hierüber der Luftstrom gedrosselt werden. Aus einer lang gestreckten Form ist eine Rautenform erzielbar und aus der Rautenform wiederum eine Dichtungsposition. Wenn das Gehäuse besonders breit ist, kann nebeneinander eine Vielzahl solcher Wandstrukturen angeordnet sein, beispielsweise zusammenfaltbare Wände, die in normaler Position gestreckt sind und aus mindestens vier Elementen bestehen. Die vorderen Elemente sind beispielsweise auf einer Achse und die hinteren Elemente an einem Stellelement angebracht, das in Längsrichtung des Gehäuses hierin verschiebbar angeordnet ist. Dieses Stellelement kann beispielsweise auch durch Hebel realisiert sein, die über Getriebe mit einem Antrieb verbunden ist.

Als Antrieb kommt beispielsweise ein manuell betätigbares Getriebe in Betracht oder ein Motor, der auf ein Mitnehmergestänge oder Getriebe wirkt, um die Schiebebewegung durch Bewegungstransformation zu erreichen. Letztere hat den Vorteil der automatischen Betätigung. Gleich ob das Luftdurchsatzelement nach der Erfindung in einer Düse in einem Kraftfahrzeug oder als Lüfter in eine Karosserie eines Fahrzeugs frontseitig eingesetzt wird, ist hierüber beispielsweise sichergestellt, dass in Abhängigkeit von der Kühlflüssigkeitstemperatur oder Motortemperatur oder auch Innenlufttemperatur der Luftdurchsatz auf einfache Weise verstellbar ist. So können beispielsweise die gestreckten Wandelemente rautenförmig gegeneinander verschoben werden, wobei die Gelenkkanten in der Schließstellung aneinander drücken, also dann, wenn beispielsweise die Wassertemperatur des Kühlers sehr niedrig ist, während sie über die Motorsteuerung in Abhängigkeit von zunehmender Temperatur leicht und später sogar vollständig geöffnet werden können, in welcher Stellung die einzelnen Wandelemente parallel liegen.

Es ist ersichtlich, dass bei Anordnung einer bestimmten Anzahl von Wänden zur Erreichung einer Ablenkung durch eine querwirkende Schiebekraft auf die Wände, diese verstellt werden können. Dies gilt gleichermaßen für Ausführungen, bei denen die Wandelemente relativ starr sind und über Gelenke oder Filmscharniere miteinander verbunden oder elastisch ausgebildet sind. Im Falle, dass die Gelenke an den starren Wandelementen vorgesehen sind, müssen auf diese beispielsweise seitliche Schubstangen wirken, um eine Auslenkung in bestimmter Richtung und in bestimmtem Umfang zu erreichen, während bei elastischer Ausformung es ausreichend ist, wenn die Querkräfte eines Schiebelementes nur an den äußeren Stirnflächen angreifen, um eine Auslenkung in die eine oder andere Richtung zu bewirken, wodurch die Wände aus ihrer geometrischen Grundform in die abgewandelte Form übergeleitet werden. Selbstverständlich kann auch eine Verstellung vorgenommen werden, wenn auf die aus elastischem Material bestehenden Wände ein Drehmoment ausgeübt wird, z. B. ein Drehteller vorderseitig oder rückseitig mit den Stirnflächen der Wände verbunden ist. Wird eine relative Verdrehung vorgenommen, so ist ersichtlich, dass die Wände dabei sich verdrehen, was ebenfalls in gewünschter Weise eine Luftstromablenkung bewirkt. Der Ausgestaltung der Wände sind keine Grenzen gesetzt.

Selbstverständlich ist die Erfindung auch auf Luftdurchsatzelemente anwendbar, die ein Gehäuse und/oder eine Wandanordnung mit runden, eckigen oder polygonalen Grundstrukturen im Querschnitt aufweisen. Wird ein rundes Gehäuse verwendet, so können die Wandanordnungen selbstverständlich eine Ringform aufweisen und beispielsweise vom Mittelpunkt ausgehend ineinander geschachtelte Rohrabschnitte aus elastischem Material sein. Die vorderen oder die hintern Stirnflächen sind am Gehäuse direkt oder indirekt über eine Trägerkonstruktion mit Luftdurchlass fixiert, während die anderen Seiten der Wände mit der Stelleinrichtung verbunden sind. Diese kann beispielsweise eine sternförmige Struktur oder Speichenradstruktur aufweisen, an der die Stirnwände punktuell befestigt sind. Wird nun das Stellrad gedreht, beispielsweise durch ein äußeres Bedienrad, das auf die Runddüse aufsetzbar ist und darin unter Reibkraft festgehalten ist, so kann durch Drehung erreicht werden, dass die normalerweise durchgehend glatten Wände sich verbiegen und gestaucht werden, da auf diese Druck ausgeübt wird. Es erfolgt also der Luftstrom in einer völlig anderen Ablenkung. Die Verwendung solcher elastischer Materialien für die Wandbildung hat zudem den Vorteil, dass die Strömungsgeräusche gedrosselt werden, da die Oberfläche und die Wand selbst geräuschdämmend wirken. Auch hier können die Wände in Längsrichtung gerade oder frei definierte geometrische Grundstrukturen aufweisen. Sie können beispielsweise auch gebogen ausgeführt sein. Es ist ferner möglich, die Stellelemente und insbesondere das Bedienelement beispielsweise zentrisch vorstehen zu lassen und dieses so auszubilden, dass es sowohl als Zugelement als auch als Drehelement verwendet werden kann. Werden beispielsweise die röhrenförmig ineinander verschachtelten Wände stirnseitig an einem Radkreuz fixiert und rückseitig mit einem solchem verbunden, das mit dem Bedienelemente gekoppelt ist, so kann durch Vorziehen eine Druckkraft auf die Wände ausgeübt werden, so dass diese seitlich abgelenkt werden. Durch Drehen selbst kann zusätzlich eine Windungskraft ausgeübt werden, so dass eine zusätzliche Verbiegung in der dritten Dimension gegeben ist. Der Luftstrom kann also in einer völlig anderen Stärke und Richtung diffus austreten.

Ringwände können allerdings auch in Einzelgehäusen angeordnet sein, um den Luftdurchlass zu drosseln. Hierzu kann beispielsweise vorgesehen sein, dass die Ringwand über die Länge verteilt Ausbuchtungen und Einzüge aufweist, so dass beim Aufsetzen auf die Mittenöffnung von einem Stellorgan und beim Zusammendrücken sowohl die mittige Eintrittsöffnung abgedichtet wird als auch die außenringförmigen vorstehenden Seitenteile sich abdichtend an dem runden Gehäuse abstützen können. Auch können solche Gehäuse im Verbund beispielsweise in einem Kühlergrill angeordnet sein und durch eine individuelle Steuerung die Luftdurchlässigkeit jedes einzelnen Luftdurchsatzelementes gesteuert werden. Beispielsweise können dazu die eingreifenden Schiebe- oder Druckelemente einzeln oder gemeinsam von Exzenter- oder Nockenelementen, durch einen Motor angetrieben, verstellt werden, so dass der Luftstrom in gewünschter Weise veränderbar ist. Selbstverständlich sind auch Aufstellkörper als Stellelemente einsetzbar, um beispielsweise durch Verschieben aus einem großen inneren Öffnungsbereich einer vorgeformten Ringwand in einen sich daran anschließenden Einschnürungsbereich geschoben werden zu können, der durch das keilförmige Aufstellelement dann aufgeweitet wird, um einen größeren Luftdurchtritt zu ermöglichen. In diesem Fall muss allerdings das Stellelement Durchgangslöcher aufweisen, um die Luft auch in gewünschter Weise durchlassen zu können. Es gibt hier verschiedenste Ausgestaltungsmöglichkeiten, um durch Einwirkung von Stellelementen die Ableitung des Luftkanals zu erreichen.

Die Wandanordnung kann auch eine Spiralform aufweisen, wenn sie aus flexiblem Material besteht. Auch in dieser Anordnung sind die Verstellmöglichkeiten durch ein Stellelement, das entweder einen Druck in Längsrichtung auf die Wand ausübt oder durch ein Drehelement, das die Spirale in sich verdreht, einstellbar. Auch die Spiralwände können vorgeformt sein, so dass diese beim Verdrehen oder Verschieben durch Druck eine bestimmte Ausprägung erfahren, die von der geometrischen Grundform abweicht. Gleich welche Form oder welcher Art das Gehäuse ist, kann das Wandprofil der eingesetzten Wände aus elastischem Material oder auch aus gegeneinander faltbaren Wandelementen so ausgebildet sein, dass die Wandelemente bezogen auf die Gehäuseform und den Luftstrom eine abdichtende Funktion vornehmen können, wenn die Stellelemente entsprechend auf diese wirken und eine seitliche Auslenkung gegenüber der Mantelwand des Gehäuses möglich ist. Auch können einzelne Wände längs zum Luftstrom in dem Gehäuse einreihig oder mehrreihig auf Abstand und versetzt gegeneinander angeordnet sein.

Es ist ferner möglich, nicht nur ineinander verschachtelte Wandanordnungen vorzusehen, sondern auch mehrere Wandanordnungen in Reihe, also in Tiefe des Gehäuses hintereinander anzuordnen. Das Gehäuse selbst kann selbstverständlich auch in einem weiteren Gehäuse verschiebbar oder verschwenkbar gelagert sein. Die Erfindung ist deshalb auch beispielsweise bei einem Kugelgelenkgehäuse anwendbar. Der Einsatz muss nur so gestaltet sein, dass in gewünschter Weise eine Verdrehung oder Verschiebung der eingesetzten, in Längsrichtung ausgerichteten Wände möglich ist, um in gewünschter Weise über das Stellelement durch Verdrehung oder Stauchung eine abgewandelte Form der Wände von der Grundform zu ermöglichen.

Die Erfindung wird nachfolgend anhand der in den Zeichnungen dargestellten Ausführungsbeispiele ergänzend erläutert.

In den Zeichnungen zeigen:
- Fig. 1: in einer Draufsicht ein rundes Luftdurchsatz- element nach der Erfindung,
- Fig. 2: das in Fig. 1 dargestellte Luftdurchsatzelement in einer perspektivischen Darstellung,
- Fig. 3: einen vereinfachten Querschnitt durch das in Fig. 1 und 2 dargestellte Luftdurchsatzelement,
- Fig. 4: das in den Fig. 1, 2 und 3 dargestellte Ausfüh- rungsbeispiel im Schnitt in einer Verstellposi- tion,
- Fig. 5: eine teilperspektivische Darstellung eines Luftdurchsatzelementes mit geformten Ringwän- den,
- Fig. 6: eine Draufsicht auf ein Luftdurchsatzelement mit spiralförmiger Wandung,
- Fig. 7: das Luftdurchsatzelement nach Fig. 6 in per- spektivischer vereinfachter Darstellung,
- Fig. 8: einen Schnitt durch das Luftdurchsatzelement nach Fig. 6 und 7 in einer angular nicht verdrehten Position,
- Fig. 9: eine Schnittzeichnung durch das Luftdurchsatzelement nach Fig. 6 und 7 in einer angular verdrehten Position,
- Fig. 10: ein Luftdurchsatzelement nach dem Stand der Technik mit einem Faltenbalg aus Wandelementen, die schwenkgelenkig miteinander verbunden sind, und dient zur Erleichterung des Verständnisses der Erfindung,
- Fig. 11: das in Fig. 10 dargestellte Ausführungsbeispiel in einer anderen Verstellposition des Faltenbalges mit abdichtender Anlage an den Seitenwänden eines eckigen Gehäuses,
- Fig. 12: ein weiteres Beispiel eines Faltenbalges nach dem Stand der Technik in einem Gehäuse eines Luftdurchsatzelementes in einer Luftdurchsatzsperrposition und dient zur Erleichtung des Verständnisses der Erfindung und
- Fig. 13: das in Fig. 12 dargestellte Ausführungsbeispiel in einer Luftdurchlassposition.

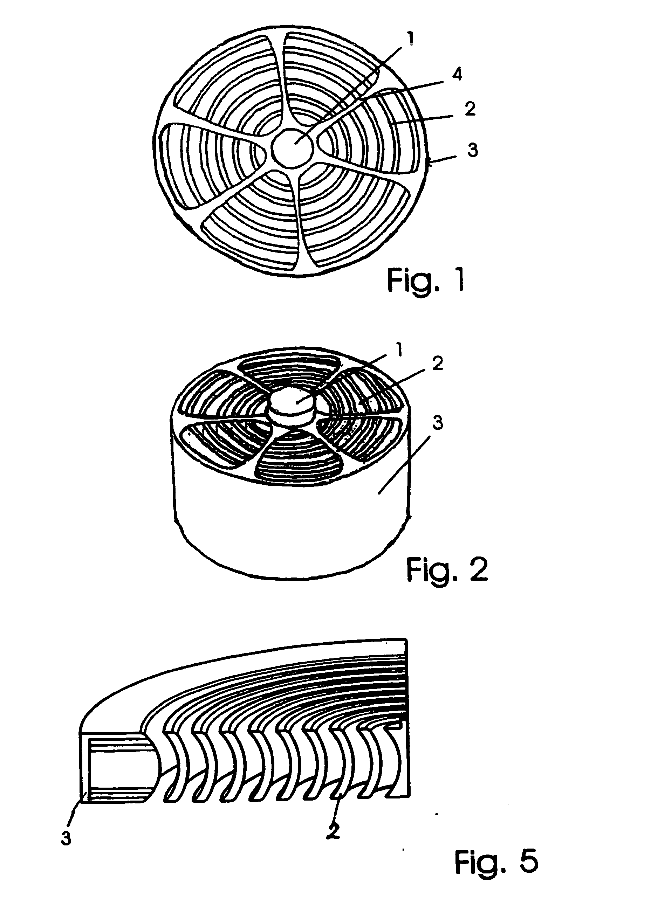

In den Fig. 1, 2, 3 und 4 ist ein erstes Ausführungsbeispiel eines erfindungsgemäßen ausgebildeten Luftdurchsatzelementes dargestellt. Es handelt sich dabei um eine formvariable Düse. Diese besteht aus einem Gehäuse 3 mit einem an der Oberseite angebrachten Träger 4 in Form einer speichenförmigen Abdeckplatte, die fest mit dem Gehäuse 3 verbunden ist. Zentrisch befindet sich im Träger 4 ein Führungsloch mit einem Betätigungselement 1, auf das später noch eingegangen wird. Aus den Figuren ist ferner ersichtlich, dass die formvariable Düse aus ineinanderliegenden elastischen Rohrabschnitten mit unterschiedlichen Durchmessern besteht. Diese Rohrabschnitte bilden ringförmige Wände 2. Die Stirnflächen der Wände 2 sind an der Unterseite des Trägers 4 abgestützt.

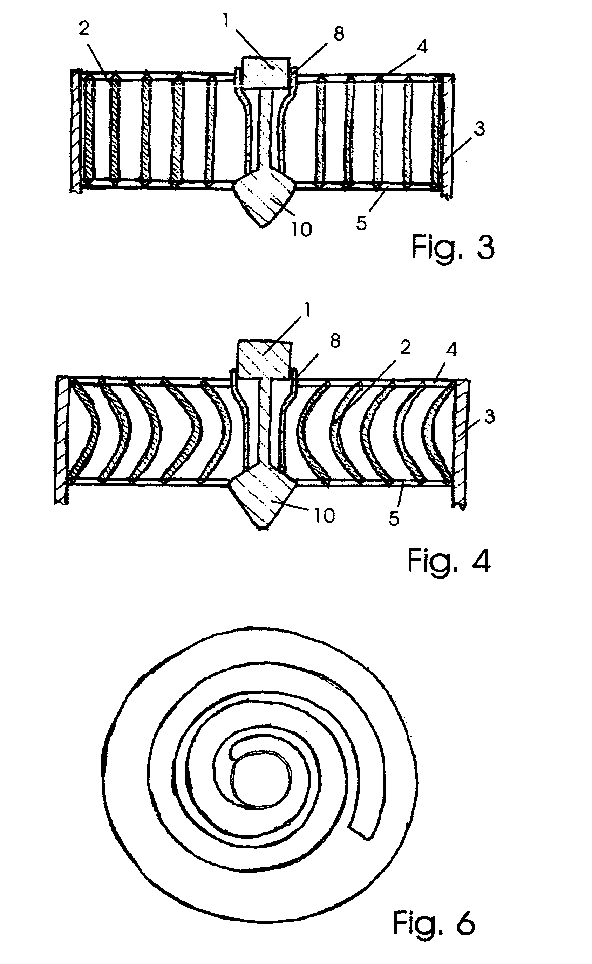

Bei der Anordnung handelt es sich um einen zylinderförmigen Düsenkopf oder ein zylinderförmiges Luftdurchsatzelement, das beispielsweise als Düse zur Belüftung des Innenraumes eines Kraftfahrzeuges zum Einsatz kommen kann. Rückseitig ist das Gehäuse an einem Luftzuführkanal angeschlossen, der nicht dargestellt ist. Die anderen Seiten der ringförmigen Wände 2 sind an einem Stellelement 5 in Form einer speichenförmigen Druckplatte befestigt oder lose anliegend abgestützt. Dieses Stellelement 5 ist in dem Gehäuse 3 längsverschieblich gelagert, wie aus den Fig. 3 und 4 ersichtlich ist. Das Bedienelement 1 weist an der Rückseite einen kegelstumpfförmigen Ansatz 10 auf, an dem das Stellelement 5 befestigt ist. Der kegelstumpfförmige Ansatz 10 bewirkt, dass die unten durch den angeschlossenen Luftkanal einströmende Luft auf die Ringwände 2 gelenkt wird, während die röhrenförmige Wandanordnung 8 der Führung und Lagerung des Bedienelementes 1 dient.

Wenn das Bedienelement 1 vorgezogen wird, was in Fig. 4 dargestellt ist, wird durch das Stellelement 5 eine Druckkraft auf die röhrenförmigen Wände 2 ausgeübt, die sich entsprechend der Darstellung in Fig. 4 aufgrund ihrer Elastizität verbiegen, so dass der Luftstrahl nicht mehr senkrecht austritt wie in Fig. 3, sondern seitlich abgelenkt wird. Die speichenförmige Abdeckplatte einerseits und das entsprechend speichenförmig ausgebildete Stellelement 5 lassen dabei den Luftstrom durchtreten. Wird das Bedienelement 1 hingegen wieder in die röhrenförmige Wandanordnung 8 hineingeschoben, so wird der Ansatz 10 nach unten verschoben und die ringförmigen Wände 2 nehmen durch die gespeicherte Federkraft die in die in Fig. 3 dargestellte senkrechte Position wieder ein. Der Luftstrom kann also auf einfache Art und Weise abgelenkt werden. Bei einer sehr starken Wölbung der Wände 2 ist sogar eine Drosselung bis hin zur Sperrung des Luftdurchtrittes möglich. Selbstverständlich können die röhrenförmigen Wände auch fest mit der Deckplatte verbunden sein. Beim Zusammendrücken der Wände 2 werden diese gespannt und können die Rückstellung selbst bewirken oder auf diese unterstützend wirken, wenn das Bedienelement 1 betätigt wird. Das Bedienelement 1 kann beispielsweise auch ein Drehknopf sein, der über eine Verbindungsstange in den kegelstumpfförmigen Ansatz 10 einschraubbar ist, so dass durch eine Drehung in gewünschter Weise der Ansatz 10 verschoben wird und eine Verbiegung der Wände 2 bewirkt, bis hin zu einer Drosselung des Luftstromes.

Fig. 5 zeigt ein Ausführungsbeispiel in einer teilperspektivischen Zeichnung, bei der in einem Gehäuse 3 ringförmige Wände 2 angeordnet sind, die bogenförmig vorgeformt sind, so dass bei Druckausübung die Verformung der ringförmigen Wände 2 stets in Richtung der Vorverformung stattfindet. Die Bedienung kann auf gleiche Art und Weise erfolgen, wie anhand der Fig. 1 bis 4 dargestellt.

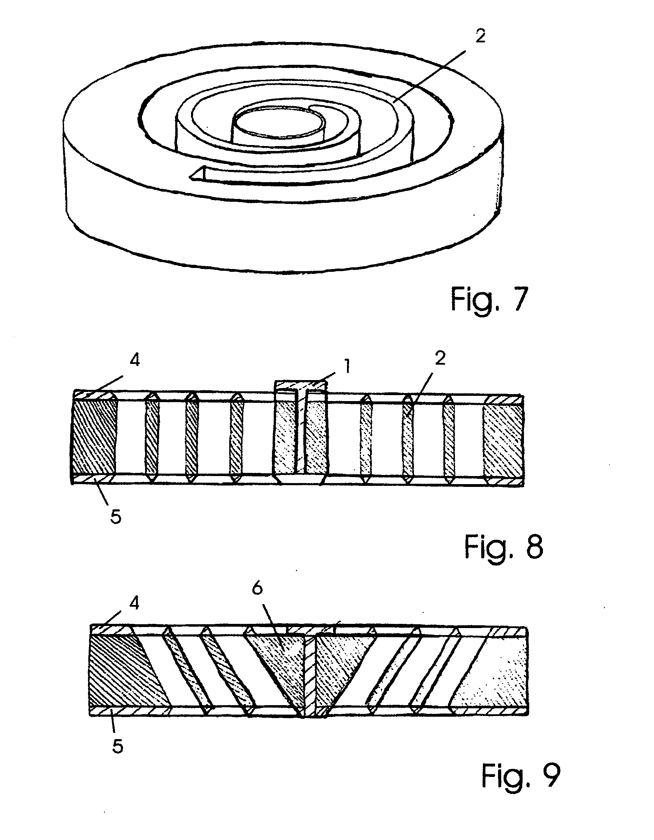

Die Fig. 6, 7, 8 und 9 zeigen ein Beispiel eines spiralförmigen Einsatzes, der in ein Gehäuse eines Luftdurchsatzelementes einsetzbar ist. Der gesamte spiralförmige Körper mit den spiralförmigen Wänden 2 besteht ebenfalls aus elastischem Material und lässt sich angular verdrehen. Hierzu müssen die Wände 2 mit Außenpunkten an einem Stellelement befestigt sein, was aus Fig. 8 und 9 ersichtlich ist. Das Bedienelement 1, das sich in der Mitte befindet, ist wiederum mit dem drehbarem Stellelement 5 verbunden, an dem die unteren Stirnflächen der spiralförmigen Wände 2 mindestens punktuell befestigt sind. Es ist ersichtlich, dass bei Drehung des Bedienelementes 1 das Stellelement 5 sich dreht und dabei automatisch die Wände 2 sich in eine schräge Position verstellen, was aus Fig. 9 ersichtlich ist, so dass der Luftstrom auch hierüber abgelenkt wird. Auch hier kann durch entsprechend hohe Elastizität des spiralförmigen Körpers und durch weiteres Drehen eine Drosselung des Luftstromes bis hin zur völligen Unterbrechung erfolgen. Die verdrehte trichterförmige Struktur bewirkt in gewünschter Weise einen diffusen Luftdurchtritt. Durch das verwendete Material ist darüber hinaus eine hohe Geräuschdämmung gegeben. Das Ausführungsbeispiel zeigt, dass die Erfindung an keine bestimmte Form der Wandbildung gebunden ist.

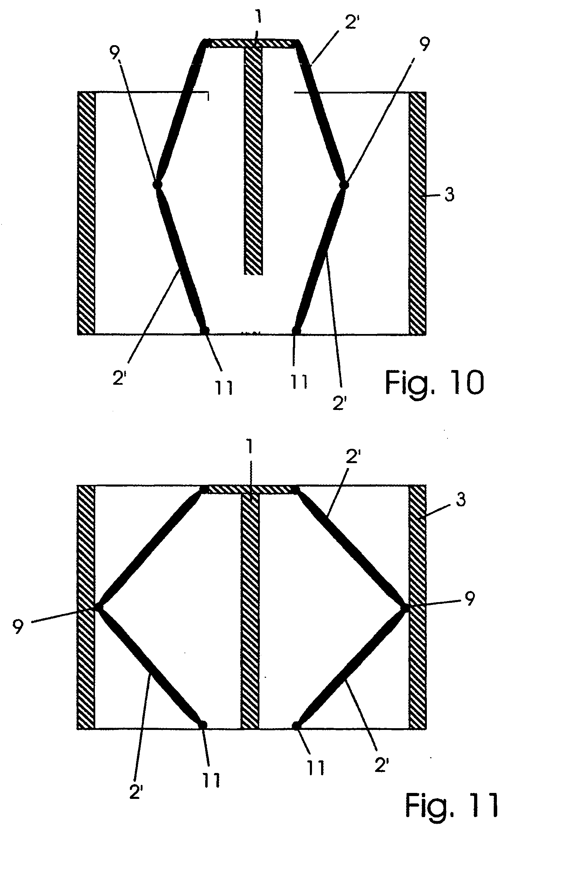

In den Fig. 10 und 11 ist eine Ausführung nach dem Stand der Technik dargestellt, der das Verständnis der Erfindung erleichtert. Vorzugsweise in einer eckigen Ausführung des Luftdurchsatzelementes zur Anwendung kommt. Das Gehäuse 3 ist beispielsweise rechteckförmig oder quadratisch im Querschnitt ausgeführt. In diesem Gehäuse 3 sind Wände eingebracht, die aus Wandelementen 2' bestehen, die beispielsweise über Filmscharniere 9 miteinander verbunden sind. Eine schwenkbewegliche Lagerung ist ferner an der Bodenplatte, die Stern- oder Speichenstruktur aufweisen muss, damit ein Luftdurchtritt gewährleistet ist, über Scharniere 11 angelenkt. Die oberen Wandelemente 2' stehen aus dem Gehäuse 3 hervor. Mit deren Enden ist das Betätigungselement 1 verbunden, was in Fig. 10 dargestellt ist. Auch hier müssen die Wandelemente 2' angelenkt sein. Wenn auf das Betätigungselement 1 sodann gedrückt wird, gelangen die aus der normalen geometrischen Grundform eingebrachten Wandelemente 2' in die in Fig. 11 dargestellte Position, in der die Filmscharniere 9 abdichtend an den Innenflächen der Seitenwände des Gehäuses 3 anliegen.

Wenn die Wandelemente 2' elastische Wandelemente sind, können die Scharniere entfallen und die gleiche Anordnung ist dann auch in ein Rundgehäuse einsetzbar. Bezüglich der Abstützung der Wandanordnung können verschiedenste Konstruktionen zur Anwendung gelangen.

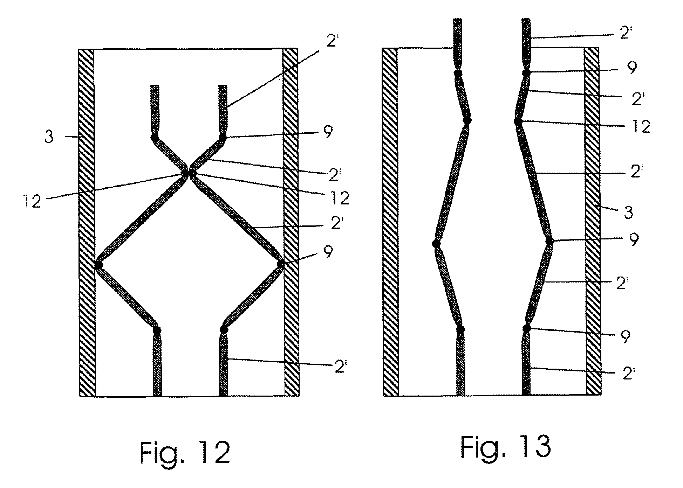

Die Fig. 12 und 13 zeigen einen weiteren Faltenbalg nach dem Stand der Technik, der das
Verständnis der Erfindung erleichtert und der aus Wandabschnitten 2' zusammengesetzt bzw. einteilig aus Kunststoff hergestellt ist. Die Bedienelemente sind hier nicht dargestellt, da das Wirkprinzip immer das gleiche ist. Auch hier handelt es sich um ein eckiges Gehäuse 3, in dem die Wandelemente 2' zu einem kanalbildenden Durchgang zusammengesetzt sind. Die Bindung erfolgt beispielsweise über Filmscharniere 9 und 12, so dass die ganzen Wandteile einteilig aus Kunststoff gespritzt oder als Blasteil hergestellt werden können. Die unteren Stirnflächen sind fest am sternförmigen Boden des Gehäuses 3 befestigt, so dass durch Ausübung einer Druckkraft von oben der normalerweise offene Faltenbalg von oben gestaucht wird und dabei die Filmscharniere 12 des oberen Abschnittes sich aufeinander zu bewegen, während die Filmscharniere 9 nach außen streben und sich an der Innenfläche des Gehäuses 3 abstützen. Der Luftdurchgang kann also gesperrt werden.

Die Bedienelemente sind hier nicht dargestellt. Sie können verschiedenartig ausgeführt sein. Sie können auch durch einen motorischen Antrieb ersetzt werden, so dass beispielsweise ein Kühlergrill, der aus derartigen Luftdurchsatzelementen zusammengesetzt ist, so gesteuert werden kann, dass eine gewünschte Luftmenge insgesamt durchzutreten vermag. Die Anordnung ist dann horizontal liegend vorzusehen. Es ist auch möglich, die Bedienung des Faltenbalges von beiden Seiten her durchzuführen. Dem Fachmann eröffnen sich hier viele Möglichkeiten. Auch dieses Ausführungsbeispiel zeigt, dass die erfinderische Lehre universell einsetzbar ist.

### Bezugszeichenliste

- 1: Bedienelement
- 2: Wände
- 2': Wandelement
- 3: Gehäuse
- 4: Träger
- 5: Stellelement
- 6:
- 7: Wandelement
- 8: Wandanordnung
- 9: Filmscharnier
- 10: Ansatz
- 11: Scharnier
- 12: Filmscharnier

## Patentansprüche

1. Luftdurchsatzelement, aufweisend ein vorder- und rückseitig offenes Gehäuse (3) mit darin angeordneten Luftleitelementen aus sich in Längsrichtung des Gehäuses (3) erstreckenden wänden (2, 2' ) aus flexiblem Material, wobei die Wände (2, 2') über Stellelemente (5) aus ihrer geometrischen Grundform in eine gewünschte abgewandelte Form durch Einwirken einer Druck- und/oder einer Schiebekraft und/oder eines Drehmomentes verbringbar sind.

2. Luftdurchsatzelement nach Anspruch 1, **dadurch gekennzeichnet, dass** die Wände (2) vorgeformte Ausprägungen bestimmter zweidimensionaler oder dreidimensionaler Struktur oder eine offene oder geschlossene mit einer runden, eckigen, polygonalen oder ovalen Querschnittsausprägung Struktur aufweisen und in Längsrichtung linear oder in Wellen- oder Faltenform oder mit unterschiedlichen lichten Weiten ausbildbar sind.

3. Luftdurchsatzelement nach Anspruch 2, **dadurch gekennzeichnet, dass** die Wände (2, 2') ineinander verschachtelt und/oder in definierten Mustern zur Bildung einer definierten großen Luftdurchlassöffnung oder zum Verschließen der Luftdurchlassöffnung des Gehäuses (3) angeordnet sind.

4. Luftdurchsatzelement nach Anspruch 1 oder 3, **dadurch gekennzeichnet, dass** die Wände (2) gegeneinander oder gegenüber der Innenfläche der Mantelwand derart verformbar sind und daran derart anliegen, dass der Luftdurchsatz drosselbar oder abstellbar ist.

5. Luftdurchsatzelement nach einem der vorhergehenden Ansprüche, **dadurch gekennzeichnet, dass** die Wände (2) an Trägern (4) innerhalb des Gehäuses (3) abgestützt sind und das Stellelement (5) auf der anderen Seite als Druck-, Dreh- oder Schiebeelement angebracht ist oder dass die andere Seite ebenfalls abgestützt ist und das Stellelement (5) auf die längsseitigen Mantelflächen als senkrecht zur Längsachse vorgesehenes Schiebe- oder Dreh-organ wirkt.

6. Luftdurchsatzelement nach Anspruch 5, **dadurch gekennzeichnet, dass** das Stellelement (5) mit einem längsverschieblichen Bedienelement (1)verbunden ist, das in einer röhrenförmigen Wandanordnung (8) geführt ist und gegenüber einer festen Stützfläche des Trägers (4) verschiebbar ist.

7. Luftdurchsatzelement nach Anspruch 1 oder 4, **dadurch gekennzeichnet, dass** die Verstellung der Wandanordnung derart erfolgt, dass der Luftdurchsatz durch das Gehäuse (3) gesperrt oder gedrosselt ist, wobei sich Abschnitte der Wände (2, 2') dichtend an der Innenfläche des Gehäuses (3) abstützen.

8. Luftdurchsatzelement nach Anspruch 1 oder 7, **dadurch gekennzeichnet, dass** das Stellelement (5) ein in Längsrichtung verschiebbarer Aufweitungskörper ist, der eine Wandanordnung zum Durchlass der Luft aufweitet, wobei das Stellelement (5) Luftdurchtrittslöcher aufweist.

9. Luftdurchsatzelement nach Anspruch 1, **dadurch gekennzeichnet, dass** das Gehäuse (3) und/oder die Wände (2) eine runde, eine eckige oder eine polygonale Grundstruktur aufweisen.

10. Luftdurchsatzelement nach Anspruch 1, **dadurch gekennzeichnet, dass** die Wände (2) eine Spiralform aufweisen.

11. Luftdurchsatzelement nach Anspruch 1, **dadurch gekennzeichnet, dass** die Wände (2, 2' ) in Längsrichtung unterschiedliche Wandstärken aufweisen und/oder dreidimensional ausgeformt sind.

12. Luftdurchsatzelement nach Anspruch 1, **dadurch gekennzeichnet, dass** ein Druckelement als Stellelement (5) vorgesehen ist und durch einen Stellring verstellbar ist und auf die Stirnflächen der Wände (2, 2' ) greift oder hieran befestigt ist.

13. Luftdurchsatzelement nach Anspruch 1, **dadurch gekennzeichnet, dass** mehrere Wände (2') im Gehäuse (3) hintereinander angeordnet sind.

14. Luftdurchsatzelement nach Anspruch 1, **dadurch gekennzeichnet, dass** das Gehäuse (3) ein im Querschnitt zylinderförmiges oder kugelförmiges Gehäuse, ein rechteckförmiges oder ein polygonalförmiges Gehäuse ist.

15. Luftdurchsatzelement nach Anspruch 14, **dadurch gekennzeichnet, dass** das Gehäuse (3) in einem weiteren Gehäuse verschiebbar und/oder verschwenkbar angeordnet ist.

16. Luftdurchsatzelement nach Anspruch 1, **dadurch gekennzeichnet, dass** das Luftdurchsatzelement ein Luftausströmer einer Düse in einem Kraftfahrzeug ist oder in einer Luftansaugöffnung in einem Kraftfahrzeug einzeln oder zu einer Einheit aus mehreren gleichen Luftdurchsatzelementen zusammengefasst eingebaut ist.

## Claims

1. Air throughput element comprising a housing (3) open at the front side and back side with air guide elements arranged therein and consisting of walls (2, 2') of flexible material extending in longitudinal direction of the housing (3), wherein the walls (2, 2') can be brought by way of setting elements (5) from their geometric basic shape into a desired modified shape by the action of a pressing force and/or a pushing force and/or a turning moment.

2. Air throughput element according to claim 1, **characterised in that** the walls (2) have pre-formed shapings of a defined two-dimensional or three-dimensional structure or an open or closed structure with a round, cornered, polygonal or oval cross-sectional shaping and can be formed in longitudinal direction to be linear or in a wavy or pleated shape or with different clear widths.

3. Air throughput element according to claim 2, **characterised in that** the walls (2, 2') are nested one in the other and/or arranged in defined patterns for formation of a defined large air throughflow opening or for closing the air throughflow opening of the housing (3).

4. Air throughput element according to claim 1 or 3, **characterised in that** the walls (2) are so deformable relative to one another or relative to the inner surface of the circumferential wall and so bear thereagainst that the air throughput can be throttled or adjusted.

5. Air throughput element according to any one of the preceding claims, **characterised in that** the walls (2) are supported at supports (4) within the housing (3) and the setting element (5) is mounted on the other side as a press turn or push element or that the other side is similarly supported and the setting element (5) acts on the longitudinal-side circumferential surfaces as a push or turn element provided perpendicularly to the longitudinal axis.

6. Air throughput element according to claim 5, **characterised in that** the setting element (5) is connected with a longitudinally displaceable control element (1) which is guided in a tubular wall arrangement (8) and is displaceable relative to a fixed support surface of the support (4).

7. Air throughput element according to claim 1 or 4, **characterised in that** adjustment of the wall arrangement is carried in such a manner that the air throughput through the housing (3) is blocked or throttled, wherein sections of the walls (2, 2') are sealingly supported at the inner surface of the housing (3).

8. Air throughput element according to claim 1 or 7, **characterised in that** the setting element (5) is an expansion body which is displaceable in longitudinal direction and which expands a wall arrangement for passage of the air, wherein the setting element (5) has air passage holes.

9. Air throughput element according to claim 1, **characterised in that** the housing (3) and/or the walls (2) has or have a round, cornered or polygonal plan structure.

10. Air throughput element according to claim 1, **characterised in that** the walls (2) have a spiral shape.

11. Air throughput element according to claim 1, **characterised in that** the walls (2, 2') in longitudinal direction have different wall thicknesses and/or have three-dimensional shaping.

12. Air throughput element according to claim 1, **characterised in that** a press element is provided as setting element (5) and is adjustable by a setting ring and engages the end surfaces of the walls (2, 2') or is fastened thereto.

13. Air throughput element according to claim 1, **characterised in that** several walls (2') are arranged in the housing (3) one behind the other.

14. Air throughput element according to claim 1, **characterised in that** the housing (3) is a housing which is cylindrical or spherical in cross-section or is a rectangular or polygonal housing.

15. Air throughput element according to claim 14, **characterised in that** the housing (3) is arranged to be displaceable and/or pivotable in a further housing.

16. Air throughput element according to claim 1, **characterised in that** the air throughput element is an air outflow means of a nozzle in a motor vehicle or is installed individually in an air intake opening in a motor vehicle or is installed combined into a unit of a plurality of identical air throughput elements.

## Revendications

1. Élément de débit d'air, présentant un boîtier avant et un boîtier arrière ouvert (3) avec des éléments de direction de l'air situés dedans faits de parois (2, 2') s'étendant dans le sens de la longueur du boîtier (3) dans un matériau flexible, les parois (2, 2') pouvant être insérées par des éléments de réglage (5), en raison de leur forme géométrique de base, dans un moule détourné au choix par l'exercice d'une pression et/ou d'une force coulissante et/ou d'un couple de serrage.

2. Élément de débit d'air selon la revendication 1 caractérisé en cela que les parois (2) présentent des marquages préformés d'une structure définie en deux ou trois dimensions ou une structure ouverte ou fermée avec un marquage de coupe ronde, carrée, polygonale ou ovale, les parois pouvant être formées dans le sens dans la longueur de manière linéaire ou en forme de vagues ou de plis ou avec différentes largeurs légères.

3. Élément de débit d'air selon la revendication 2 caractérisé en cela que les parois (2, 2') sont incluses l'une dans l'autre et/ou sont placées selon des motifs définis pour former une ouverture de passage d'air d'une taille définie ou pour fermer l'ouverture de passage d'air du boîtier (3).

4. Élément de débit d'air selon la revendication 1 ou 3 caractérisé en cela que les parois (2) sont formables ou sont placées l'une contre l'autre ou en face de la surface interne de la paroi du manteau de telle sorte que le débit d'air peut être varié ou arrêté.

5. Élément de débit d'air selon l'une des revendications précitées caractérisé en cela que les parois (2) reposent sur des supports (4) à l'intérieur du boîtier (3)et que l'élément de réglage (5) de l'autre côté est placé en tant qu'élément de pression, de rotation ou de coulisse ou que l'autre côté soit également appuyé et que l'élément de réglage (5) influe sur les surfaces longitudinales du manteau en tant qu'organe de coulisse ou de rotation prévu verticalement à l'axe longitudinal.

6. Élément de débit d'air selon la revendication 5 caractérisé en cela que l'élément de réglage (5) est relié à un élément de commande (1) pouvant glisser en longueur qui est guidé dans une structure de paroi (8) en forme de tube et qui peut être coulissé en face d'une surface fixe d'appui du support (4).

7. Élément de débit d'air selon la revendication 1 ou 4 caractérisé en cela que le réglage de la structure de la paroi a lieu de telle sorte que le débit d'air est bloqué ou contrôlé par le boîtier (3), des portions des parois (2, 2') reposant de manière étanche sur la surface intérieure du boîtier (3).

8. Élément de débit d'air selon la revendication 1 ou 7 caractérisé en cela que l'élément de réglage (5) est un corps d'élargissement pouvant être glissé dans le sens de la longueur qui élargit une structure de paroi pour laisser passer l'air, l'élément de réglage (5) présentant des trous de passage de l'air.

9. Élément de débit d'air selon la revendication 1 caractérisé en cela que le boîtier (3) et/ou les parois (2) présentent une structure de base carrée ou polygonale.

10. Élément de débit d'air selon la revendication 1 caractérisé en cela que les parois (2) présentent une forme de spirale.

11. Élément de débit d'air selon la revendication 1 caractérisé en cela que les parois (2, 2') présentent dans le sens de la longueur différentes épaisseurs et/ou soient formées en trois dimensions.

12. Élément de débit d'air selon la revendication 1 caractérisé en cela qu'un élément de pression est prévu en tant qu'élément de réglage (5) peut être réglé par une bague de réglage et accroche sur les surfaces frontales des parois (2, 2') ou y est fixé.

13. Élément de débit d'air selon la revendication 1 caractérisé en cela que plusieurs parois (2') sont situées l'une derrière l'autre dans le boîtier (3).

14. Élément de débit d'air selon la revendication 1 caractérisé en cela que le boîtier (3) est un boîtier en forme de bille ou en forme de cylindre dans la coupe, un boîtier rectangulaire ou un boîtier polygonal.

15. Elément de débit d'air selon la revendication 14 caractérisé en cela que le boîtier (3) peut être glissé dans un autre boîtier et/ou est placé de manière à basculer.

16. Élément de débit d'air selon la revendication 1 caractérisé en cela que l'élément de débit d'air est un diffuseur d'air d'une buse dans un véhicule ou est installé individuellement dans l'ouverture d'aspiration d'air dans un véhicule ou est rassemblé dans une unité faite de plusieurs éléments de débits d'air similaires.
